# EUROPEAN PATENT APPLICATION

(11) **EP 2 947 620 A1**
(43) Date of publication of application: **25.11.2015**
(21) Application number: 15168380.2
(22) Date of filing: 20.05.2015
(51) Int. Cl.: G06Q 30/06, G09F 3/00

(54) **ELECTRONIC SHELF LABEL SYSTEM AND OPERATING METHOD THEREOF**

(30) Priority: 20.05.2014 KR 20140060341
(71) Applicant: Samsung Electro-Mechanics Co., Ltd., Gyeonggi-do (KR)
(72) Inventor: JUN, Hee Sung, 443-743 Gyeonggi-Do (KR); SEO, Jeong Su, 443-743 Gyeonggi-Do (KR); KIM, Young Suk, 443-743 Gyeonggi-Do (KR)
(74) Representative: Grünecker Patent- und Rechtsanwälte PartG mbB

(57) **Abstract**

Disclosed herein are an electronic shelf label system and an operating method thereof. The electronic shelf label system includes: a main server having product information on products stored therein; an electronic shelf label receiving the product information from the main server, displaying the received product information, and including a near field communication tag having a product recognition identification (ID) pre-stored therein; and a mobile communication terminal reading the product recognition ID, transmitting the read product recognition ID to the main server, receiving the product information from the main server, and displaying the received product information.

## Description

### CROSS REFERENCE(S) TO RELATED APPLICATIONS

This application claims the benefit under 35 U.S.C. Section 119 of Korean Patent Application Serial No. 10-2014-0060341, entitled "Electronic Shelf Label System and Operating Method Thereof" filed on May 20, 2014, which is hereby incorporated by reference in its entirety into this application.

### BACKGROUND OF THE INVENTION

### 1. Technical Field

The present invention relates to an electronic shelf label system and an operating method thereof.

### 2. Description of the Related Art

Generally, labels displaying information and prices of products have been used in order to exhibit and sell a large number of products in predetermined spaces such as various retail stores, or the like.

When a price is changed in some of tens of thousands or more of products, workers should summarize the products of which the price is changed, manually write or print product information such as the changed price, or the like, visit positions of corresponding products displayed in the retail store, and correct and replace a label. However, whenever price information on the products is changed, a time and workers for this work and replacement are required. Therefore, there is a need to solve this problem due to an attribute of a large retail store, such that there is a need to develop a means capable of rapidly, accurately, and simply changing product information by adding only a minimum cost.

Recently, in accordance with the above-mentioned market's demand, an attempt to replace an existing paper label with an electronic shelf label (ESL) has been conducted.

An electronic shelf label system using the electronic shelf label includes a main server, a client server, and the electronic shelf label.

The main server includes a database for product information within a store, and the product information is transferred to the client server within the store by transfer control protocol/Internet protocol (TCP/IP) network communication through wired/wireless local area networks (LANs).

The product information stored in the client server is transmitted and received to and from the electronic shelf label within the store through a gateway within the store in wired/wireless communication schemes.

However, an electronic shelf label system according to the related art displays only simple information such as a price of a product corresponding to the electronic shelf label, but may not simultaneously display various information on products. Therefore, the electronic shelf label system according to the related art displays only restrictive information on a product corresponding to the electronic shelf label such as a price, a name, a number, an origin, and the like, of the product, such that consumers may not recognize various and detailed information on products.

### [Related Art Document]

### [Patent Document]

(Patent Document 1) Korean Patent Laid-Open Publication No. 2010-0017243

### SUMMARY OF THE INVENTION

An object of the present invention is to allow confirmation of additional detailed information on products, payment of a desired product, and the like, to be performed by combining near field communication with a mobile communication terminal with an electronic shelf label system.

According to an exemplary embodiment of the present invention, there is provided an electronic shelf label system including: a main server having product information on products stored therein; an electronic shelf label receiving the product information from the main server, displaying the received product information, and including a near field communication tag having a product recognition identification (ID) pre-stored therein; and a mobile communication terminal reading the product recognition ID, transmitting the read product recognition ID to the main server, receiving the product information from the main server, and displaying the received product information.

The product recognition ID may include a medium access control (MAC) address and a security key.

The main server may include: a database having the product information stored therein; a server communicating unit transmitting the product information to the electronic shelf label or the mobile communication terminal and receiving the product recognition ID from the mobile communication terminal; and a server controlling unit controlling the database and the server communicating unit.

The mobile communication terminal may include: a reading unit reading the product recognition ID from the near field communication tag; a terminal communicating unit transmitting the product recognition ID to the main server and receiving the product information from the main server; a terminal displaying unit displaying the product information received through the terminal communicating unit; and a terminal controlling unit controlling the reading unit, the terminal communicating unit, and the terminal displaying unit.

The main server may transmit the product information mapped to the MAC address to the electronic shelf label or the mobile communication terminal.

The product information transmitted and received between the mobile communication terminal and the main server may be encoded using the security key.

The product information transmitted and received between the main server and the electronic shelf label may be encoded using the security key.

The electronic shelf label system may further include: a client server receiving the product information from the main server; and a gateway receiving the product information from the client server and transmitting the received product information to the electronic shelf label.

The product recognition ID may further include a client code.

The main server may transmit the product information to the client server corresponding to the client code.

The product information transmitted and received between the gateway and the electronic shelf label may be encoded using the security key.

According to another exemplary embodiment of the present invention, there is provided an operating method of an electronic shelf label system, including: (a) pre-storing a product recognition ID in a near field communication tag included in an electronic shelf label; (b) reading the product recognition ID by a mobile communication terminal; (c) transmitting the read product recognition ID to a main server; (d) recognizing product information corresponding to the product recognition ID transmitted to the main server; (e) transmitting the recognized product information to the electronic shelf label; and (f) displaying the product information transmitted to the electronic shelf label.

The product recognition ID may include an MAC address and a security key.

In the step (e), the product information mapped to the MAC address may be transmitted to the electronic shelf label.

In the step (e), the product information transmitted to the electronic shelf label may be encoded using the security key.

The step (e) may include: (e-1) transmitting the recognized product information to a client server; (e-2) transmitting the product information transmitted to the client server to a gateway; and (e-3) transmitting the product information transmitted to the gateway to the electronic shelf label.

The product recognition ID may further include a client code.

In the step (e-1), the recognized product information may be transmitted to the client server corresponding to the client code.

In the step (e-3), the product information transmitted to the electronic shelf label may be encoded using the security key.

According to still another exemplary embodiment of the present invention, there is provided an operating method of an electronic shelf label system, including: (a) pre-storing a product recognition ID in a near field communication tag included in an electronic shelf label; (b) reading the product recognition ID by a mobile communication terminal; (c) transmitting the read product recognition ID to a main server; (d) recognizing product information corresponding to the product recognition ID transmitted to the main server; (e) transmitting the recognized product information to the mobile communication terminal; and (f) displaying the product information transmitted to the mobile communication terminal.

The product recognition ID may include an MAC address and a security key.

In the step (e), the product information mapped to the MAC address may be transmitted to mobile communication terminal.

In the step (e), the product information transmitted to mobile communication terminal may be encoded using the security key.

The operating method of an electronic shelf label system may further include (g) paying for a product corresponding to the displayed product information.

In the step (g), payment information on the product may be encoded using the security key.

### BRIEF DESCRIPTION OF THE DRAWINGS

FIG. 1 is a conceptual diagram showing an electronic shelf label system according to an exemplary embodiment of the present invention;
FIG. 2 is a block diagram showing a main server according to an exemplary embodiment of the present invention;
FIG. 3 is a block diagram showing an electronic shelf label according to an exemplary embodiment of the present invention;
FIG. 4 is a block diagram showing a mobile communication terminal according to an exemplary embodiment of the present invention;
FIG. 5 is a flow chart showing an operating method of an electronic shelf label system according to an exemplary embodiment of the present invention; and
FIG. 6 is a flow chart showing another operating method of an electronic shelf label system according to an exemplary embodiment of the present invention.

### DESCRIPTION OF THE PREFERRED EMBODIMENTS

Hereinafter, exemplary embodiments of the present invention will be described with reference to the accompanying drawings. However, exemplary embodiments of the present invention are only an example, and the present invention is not limited thereto.

In describing the present invention, when a detailed description of known technologies related to the present invention may unnecessarily make unclear the gist of the present invention, a detailed description thereof will be omitted.

Further, in the present description, terms "first", "second", and the like, are used to distinguish one component from another component, and the components are not limited by these terms.

In addition, the spirit of the present invention is determined by the claims and the following exemplary embodiments may be provided to efficiently describe the spirit of the present invention to those skilled in the art.

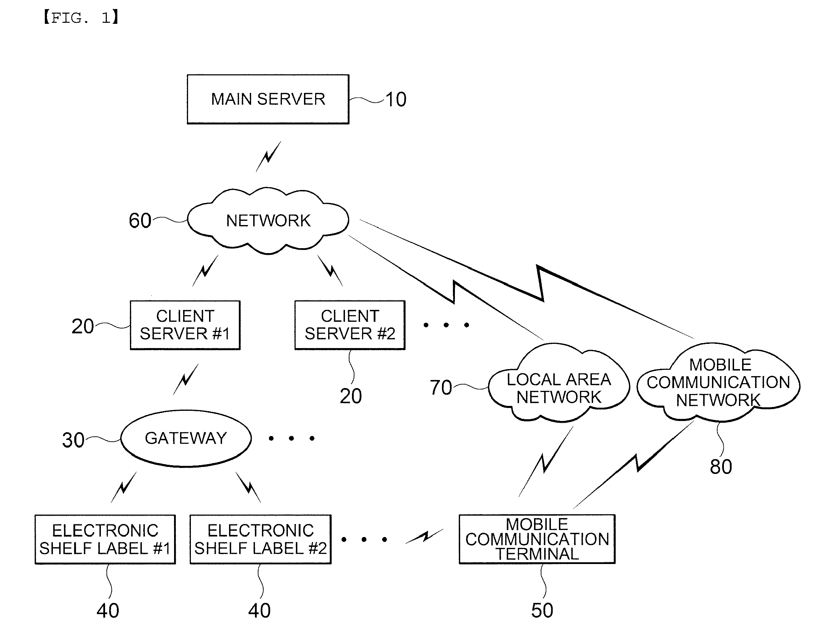

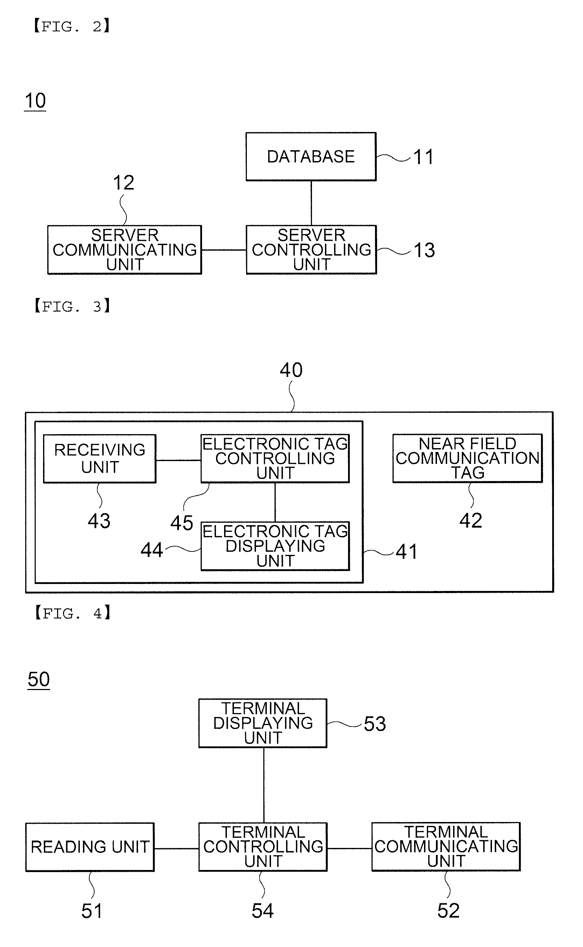

FIG. 1 is a conceptual diagram showing an electronic shelf label system according to an exemplary embodiment of the present invention; FIG. 2 is a block diagram showing a main server according to an exemplary embodiment of the present invention; FIG. 3 is a block diagram showing an electronic shelf label according to an exemplary embodiment of the present invention; and FIG. 4 is a block diagram showing a mobile communication terminal according to an exemplary embodiment of the present invention.

As shown in FIGS. 1 to 4, the electronic shelf label system according to an exemplary embodiment of the present invention may be configured to include a main server 10, electronic shelf labels 40, and a mobile communication terminal 50.

The main server 10 may include a database 11 storing product information on products displayed in a retail store therein, a server communicating unit 12 transmitting the product information, and a server controlling unit 13 controlling the database 11 and the server communicating unit 12.

Here, the database 11 may store various information required for operating the retail store as well as the product information therein.

Here, the product information may be a price, a name, a use method, a number, a manufacturer, an advertisement, a discount coupon, a manufacturing date, an origin, a recipe, and the like, of a product.

The server communicating unit 12 may transmit the product information stored in the database 11 to the electronic shelf label 40 or the mobile communication terminal 50.

In addition, the server communicating unit 12 may receive a product recognition identification (ID) to be described below from the mobile communication terminal 50.

The server controlling unit 13 may manage information stored in the database 11, for example, the product information, various information required for operating the retail store, and the like, and manage communication with the server communicating unit 12.

The main server 10 may transmit the product information to a client server 20 through a network 60.

Here, the client server 20 may be provided in each of the retail stores. The client server 20 provided in each of the retail stores may have a unique client code, which may be included in the product information and be stored in the database 11 of the main server 10.

The client server 20 may transmit the product information received from the main server 10 to a plurality of electronic shelf labels 40 through one or more gateway 30 provided in the retail store.

Here, the client server 20 may transmit the product information to the gateway 30 in a wired communication scheme.

The gateway 30 may transmit the product information received from the client server 20 to the respective electronic shelf labels 40 in a wireless communication scheme.

Here, the gateway 30 may use a wireless communication scheme such as Zigbee, or the like, so that a large number of electronic shelf labels 40 may perform communication.

In addition, the gateway 30 encodes the product information transmitted to the electronic shelf labels 40 using a security key included in a product recognition ID to be described below and then transmits the encoded product information, thereby making it possible to enhance security for data transmitted and received at the time of wireless communication.

Although the electronic shelf label system including the client server 20 and the gateway 30 has been described in the present exemplary embodiment, the client server 20 or the gateway 30 may be omitted, and the product information may be directly transmitted from the main server 10 to the electronic shelf label 40 or be transmitted from the main server 10 to the electronic shelf label 40 through the gateway 30.

Here, the product information transmitted by wireless communication is encoded using the security key included in the product recognition ID and is then transmitted, thereby making it possible to enhance security for data transmitted and received at the time of wireless communication.

The electronic shelf label 40 may include an electronic tag 41 displaying the product information received from the gateway 30 and a near field communication tag 42 communicating with the mobile communication terminal 50 in a near field communication scheme.

The electronic tag 41 may include a receiving unit 43 receiving the product information from the gateway 30, an electronic tag displaying unit 44 displaying the received product information, and an electronic tag controlling unit 45 controlling the receiving unit 43 and the electronic tag displaying unit 44. Here, the electronic tag 41 may decode the encoded product information using the security key included in the product recognition ID and then display the decoded product information on the electronic tag displaying unit 44.

The near field communication tag 42, which communicates with the mobile communication terminal 50 in a near field communication scheme, may store the product recognition ID therein.

Here, the product recognition ID, which is to recognize the electronic shelf label 40 corresponding to a product, may include a medium access control (MAC) address, a client code, a security key, and the like, and unique product recognition IDs corresponding to the respective electronic shelf labels 40 may be stored in the respective electronic shelf labels 40.

Here, the product recognition ID may be pre-stored in the near field communication tag 42 in a manufacturing process of the near field communication tag 42, and it is preferable that different product recognition IDs are stored in each of the near field communication tags 42 included in each of the electronic shelf labels 40.

Meanwhile, the near field communication tag 42 may be a near field communication (NFC) module.

The mobile communication terminal 50 may communicate with the near field communication tag 42 in a near field communication scheme to receive the product recognition ID.

The mobile communication terminal 50 may include a reading unit 51 reading the product recognition ID from the near field communication tag 42, a terminal communicating unit 52 transmitting the product recognition ID to the main server 10 and receiving the product information from the main server 10, a terminal displaying unit 53 displaying the product information received through the terminal communicating unit 52, and a terminal controlling unit 54 controlling the reading unit 51, the terminal communicating unit 52, and the terminal displaying unit 53.

The reading unit 51 communicates with the mobile communication terminal 50 in the near field communication scheme to receive the product recognition ID, and the mobile communication terminal 50 may read the product recognition ID stored in the near field communication tag 42 through tagging with the near field communication tag 42.

Here, the tagging indicates allowing the mobile communication terminal 50 to approach the near field communication tag 42 to allow the mobile communication terminal 50 to perform near field communication with the near field communication tag 42 to read the product recognition ID.

The terminal communicating unit 52, which communicates with the main server 10, may be connected to the network 60 through a local area network 70 or a mobile communication network 80 and may communicate with the main server 10 through the network 60.

Here, the terminal communicating unit 52 may transmit the product recognition ID read through the reading unit 51 to the main server 10 and receive the product information on the product corresponding to the product recognition ID from the main server 10.

Here, the product information received from the main server 10 may be product information more detailed as compared with the product information transmitted to the electronic shelf label 40. For example, when a price, a name, a manufacturer, and the like, of a product are displayed on the electronic shelf label 40, a price, a name, a use method, a number, a manufacturer, an advertisement, a discount coupon, a manufacturing date, an origin, a recipe, and the like, of a product may be displayed on the mobile communication terminal 50.

The terminal displaying unit 53, which displays the product information received through the terminal communicating unit 52, may be implemented by various display devices.

The terminal controlling unit 54, which controls the reading unit 51, the terminal communicating unit 52, and the terminal displaying unit 53, may have a setting application installed therein in order to set an initial electronic shelf label, and may display the product information through the product recognition ID read from the near field communication tag 42 or may have a payment application installed therein in order to pay for a product.

Meanwhile, the product recognition ID may include an MAC address capable of identifying the electronic shelf label 40, a client code capable of identifying the corresponding client server 20, and a security key capable of encoding data transmitted and received in a wireless communication scheme.

Therefore, a product corresponding to the electronic shelf label 40 may be identified by the MAC address included in the product recognition ID.

At the time of initial setting of the electronic shelf label, the main server 10 may map pre-stored product information on products to an MAC address transmitted from the mobile communication terminal 50, and the mapped product information may be transmitted to and displayed on the electronic shelf label 40.

Then, in the case in which the product recognition ID including the same MAC address from the mobile communication terminal 50 is received in order to confirm the product information on the product corresponding to the electronic shelf label 40, the main server 10 may recognize the product recognition ID and transmit the product information mapped to the MAC address to the mobile communication terminal 50.

The main server 10 may transmit the product information to the client server 20 corresponding to the client code. Therefore, the main server 10 may transmit the product information to the electronic shelf label 40 through the corresponding client server 20.

The security key included in the product recognition ID may encode the data transmitted and received in the wireless communication scheme on the electronic shelf label system.

That is, the product information, or the like, transmitted and received between the mobile communication terminal 50 and the main server 10 by the wireless communication may be encoded through the security key included in the product recognition ID, and the product information, or the like, wirelessly transmitted and received between the main server 10 and the electronic shelf label 40 or the gateway 30 and the electronic shelf label 40 may also be encoded through the security key included in the product recognition ID.

An operating method of the electronic shelf label system according to an exemplary embodiment of the present invention configured as described above will be described below in detail.

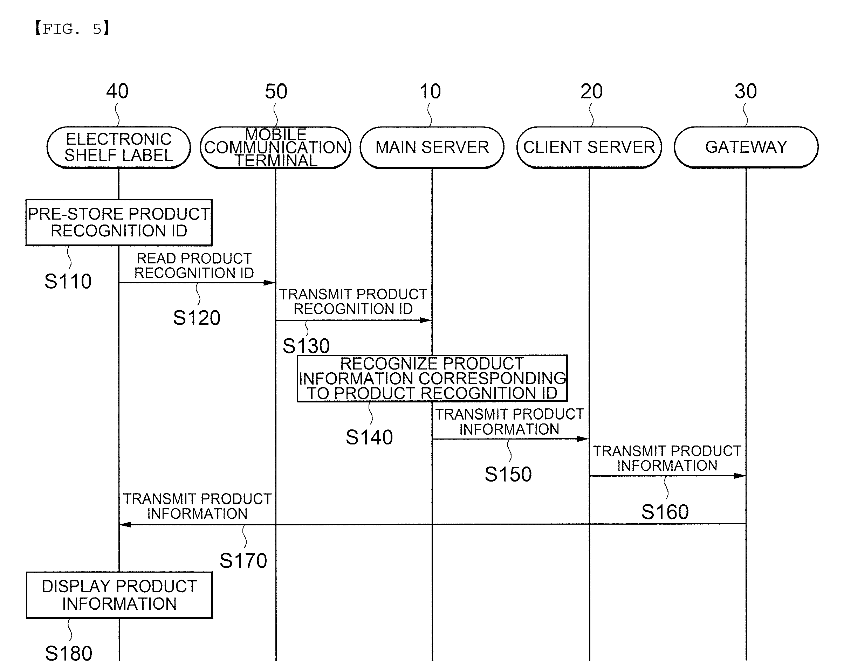

FIG. 5 is a flow chart showing an operating method of an electronic shelf label system according to an exemplary embodiment of the present invention.

Referring to FIG. 5, the product recognition ID may be first pre-stored in the near field communication tag included in the electronic shelf label 40 (S110).

Here, the product recognition ID may be pre-stored in a manufacturing process of the near field communication tag.

Here, the product recognition ID may include an MAC address capable of identifying the electronic shelf label 40, a client code capable of identifying the client server communicating with the electronic shelf label 40, and a security key capable of encoding data transmitted and received at the time of wireless communication.

Then, the pre-stored product recognition ID may be read by the mobile communication terminal 50 (S120).

Here, the mobile communication terminal 50 may read the product recognition ID from the near field communication tag included in the electronic shelf label 40 through tagging with the electronic shelf label 40.

Next, the read product recognition ID may be transmitted to the main server 10 (S130).

Here, the mobile communication terminal 50 may have the setting application installed therein in order to set the initial electronic shelf label. Therefore, the product recognition ID may be encoded using the security key included in the product recognition ID through the setting application and be then transmitted to the main server 10.

Next, the product information corresponding to the product recognition ID transmitted to the main server 10 may be recognized (S140).

Here, the main server 10 may map the product information pre-stored therein to the MAC address included in the received product recognition ID.

That is, the main server 10 may search and recognize the pre-stored product information on the product corresponding to the MAC address and map the recognized product information to the MAC address.

Next, the recognized product information may be transmitted to the electronic shelf label 40 (S150, S160, and S170).

In this process, the product information mapped to the MAC address may be transmitted to the electronic shelf label 40, and the transmitted product information may be encoded using the security key included in the product recognition ID.

In addition, in this process, the main server 10 may transmit the recognized product information to the client server 20 corresponding to the client code (S150).

That is, the main server 10 may transmit the product information to the client server 20 having the same client code as the client code included in the product recognition ID. In this case, the main server 10 may transmit the product information to the client server 20 in a wired communication scheme.

Then, the product information transmitted to the client server 20 may be transmitted to the gateway 30 (S160). In this case, the client server 20 may transmit the product information to the gateway 30 in a wired communication scheme.

Then, the product information transmitted to the gateway 30 may be transmitted to the electronic shelf label 40 (S170).

Here, the gateway 30 may transmit the product information in a wireless communication scheme. Here, the gateway 30 may encode the product information using the security key included in the product recognition ID and then transmit the encoded product information to the electronic shelf label 40.

Next, the product information transmitted to the electronic shelf label 40 may be displayed (S180).

Here, the electronic shelf label 40 may decode the product information encoded and received through the gateway 30 and display the decoded product information.

In addition, another operating method of the electronic shelf label system according to an exemplary embodiment of the present invention configured as described above will be described below in detail.

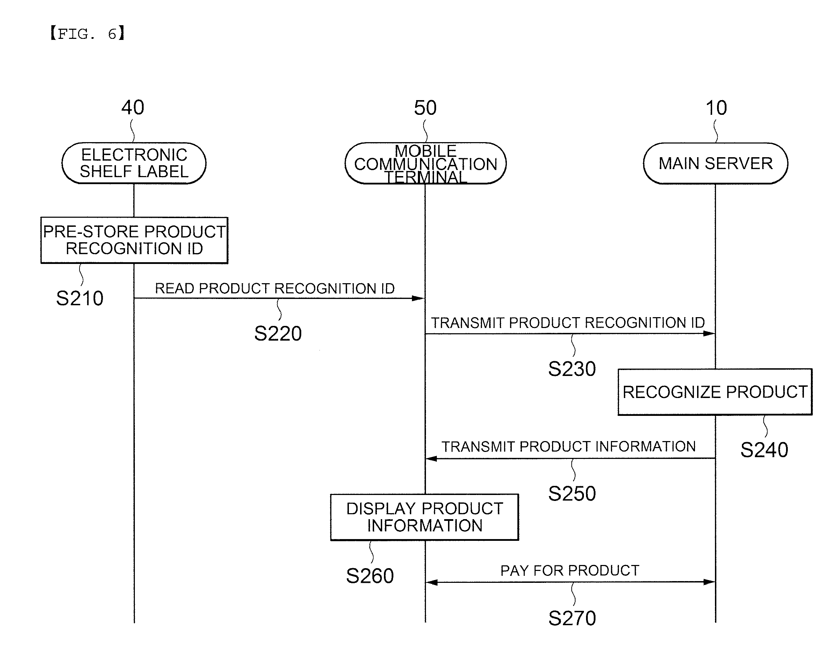

FIG. 6 is a flow chart showing another operating method of an electronic shelf label system according to an exemplary embodiment of the present invention.

Referring to FIG. 6, the product recognition ID may be first pre-stored in the near field communication tag included in the electronic shelf label 40 (S210).

Here, the product recognition ID may be pre-stored in a manufacturing process of the near field communication tag.

Meanwhile, the product recognition ID may include the MAC address capable of identifying the electronic shelf label 40 and the security key capable of encoding the data transmitted and received at the time of wireless communication.

Then, the pre-stored product recognition ID may be read by the mobile communication terminal 50 (S220).

Here, the mobile communication terminal 50 may read the product recognition ID from the near field communication tag included in the electronic shelf label 40 through tagging with the electronic shelf label 40.

Next, the read product recognition ID may be transmitted to the main server (S230).

Here, the mobile communication terminal 50 may display the product information through the product recognition ID or may have the payment application installed therein in order to pay for the product.

Therefore, the mobile communication terminal 50 may encode the product recognition ID using the security key included in the product recognition ID through the payment application and then transmit the encoded product recognition ID to the main server 10 through a local area network, a mobile communication network, and a network.

Next, the product information corresponding to the product recognition ID transmitted to the main server 10 may be recognized (S240).

Here, the main server 10 may decode the encoded product recognition ID and then search the product information pre-stored in the main server 10 using the MAC address included in the product recognition ID to recognize the product information mapped to the corresponding MAC address.

Next, the recognized product information may be transmitted to the mobile communication terminal 50 (S250).

Here, the main server 10 may transmit the product information mapped to the MAC address included in the product recognition ID to the mobile communication terminal 50.

Here, the main server 10 may encode the product information using the security key and then transmit the encoded product information to the mobile communication terminal 50 through the local area network or the mobile communication network.

Next, the product information transmitted to the mobile communication terminal 50 may be displayed (S260).

Here, the mobile communication terminal 50 may decode the product information encoded using the security key through the installed payment application and display the decoded product information.

Meanwhile, the product corresponding to the product information displayed on the mobile communication terminal 50 may be paid for (S270).

Here, the mobile communication terminal 50 may transmit a payment request for the product corresponding to the product information displayed on the mobile communication terminal 50 to the main server 10, and the main server 10 may approve the payment request for the product.

Here, payment information on the product transmitted and received between the mobile communication terminal 50 and the main server 10 may be encoded using the security key. For example, the payment information on the product may be product information on products, personal authentication information of customers, a card number, a card password, or the like.

As set forth above, with the electronic shelf label system and the operating method thereof according to an exemplary embodiment of the present invention, consumers may confirm detailed information on their desired products in real time and conveniently pay for their desired product using the electronic shelf label and the mobile communication terminal in which a near field communication function is mounted.

Functions of various components shown in the accompanying drawings of the present specification may be provided by using dedicated hardware as well as hardware that may be associated with appropriate software to execute the software. When these functions are provided by processors, they may be provided by a single dedicated processor, a single shared processor, or a plurality of individual processors that may be partially shared with each other.

In the claims of the present specification, components represented as means for performing specific functions may include any scheme performing the specific functions and may include a combination of components performing the specific functions or any type of software including firmware, a microcode, or the like, combined with components appropriate for executing software for performing the specific functions.

In the present specification, an expression 'exemplary embodiment', and the like, of principles of the present invention and various modifications of this expression mean that specific features, structures, characteristics, and the like, associated with this exemplary embodiment are included in at least one exemplary embodiment of a principle of the present invention. Therefore, an expression 'in an exemplary embodiment' and any other modified examples disclosed throughout the present specification do not necessarily denote the same exemplary embodiment.

In the present specification, an expression 'connect', 'connecting', or the like, and various modifications of this expression are used as the meaning including that one component is directly connected to another component or is indirectly connected to another component through the other component. In addition, unless explicitly described to the contrary, a singular form includes a plural form in the present specification. Further, components, steps, operations, and configurations stated as 'include' or 'including' in the present specification does not exclude presence or additions of other components, steps, operations, and configurations.

Although drawings describing process steps are present among the accompanying drawings of the present specification, it is not to understand that these steps should be performed in a shown specific sequence or all shown steps should be performed in order to obtain a preferable result. In a specific case, it is advantageous to perform multitasking and perform steps in parallel with each other.

Hereinabove, exemplary embodiments of the present invention have been mainly described. All exemplary embodiments disclosed in the present specification and conditional examples have been described in order to help those skilled in the art or readers to understand a principle and a concept of the present invention, and those skilled in the art may understand that the present invention may be implemented in a modified form without departing from an essential feature thereof. Therefore, exemplary embodiments disclosed in the present specification may be considered in an illustrative viewpoint rather than a restrictive viewpoint. The scope of the present invention is defined by the claims rather than the above-mentioned description, and it is to be understood that all differences that are within a range equivalent to the claims are included in the present invention.

## Claims

1. An electronic shelf label system comprising:
a main server having product information on products stored therein;
an electronic shelf label receiving the product information from the main server, displaying the received product information, and including a near field communication tag having a product recognition identification (ID) pre-stored therein; and
a mobile communication terminal reading the product recognition ID, transmitting the read product recognition ID to the main server, receiving the product information from the main server, and displaying the received product information.

2. The electronic shelf label system according to claim 1, wherein the product recognition ID includes a medium access control (MAC) address and a security key.

3. The electronic shelf label system according to claim 2, wherein the main server includes:
a database having the product information stored therein;
a server communicating unit transmitting the product information to the electronic shelf label or the mobile communication terminal and receiving the product recognition ID from the mobile communication terminal; and
a server controlling unit controlling the database and the server communicating unit.

4. The electronic shelf label system according to claim 2, wherein the mobile communication terminal includes:
a reading unit reading the product recognition ID from the near field communication tag;
a terminal communicating unit transmitting the product recognition ID to the main server and receiving the product information from the main server;
a terminal displaying unit displaying the product information received through the terminal communicating unit; and
a terminal controlling unit controlling the reading unit, the terminal communicating unit, and the terminal displaying unit.

5. The electronic shelf label system according to claim 2, wherein the main server transmits the product information mapped to the MAC address to the electronic shelf label or the mobile communication terminal.

6. The electronic shelf label system according to claim 2, wherein the product information transmitted and received between the mobile communication terminal and the main server is encoded using the security key.

7. The electronic shelf label system according to claim 2, wherein the product information transmitted and received between the main server and the electronic shelf label is encoded using the security key.

8. The electronic shelf label system according to claim 2, further comprising:
a client server receiving the product information from the main server; and
a gateway receiving the product information from the client server and transmitting the received product information to the electronic shelf label.

9. The electronic shelf label system according to claim 8, wherein the product recognition ID further includes a client code.

10. The electronic shelf label system according to claim 9, wherein the main server transmits the product information to the client server corresponding to the client code.

11. The electronic shelf label system according to claim 8, wherein the product information transmitted and received between the gateway and the electronic shelf label is encoded using the security key.

12. An operating method of an electronic shelf label system, comprising:
(a) pre-storing a product recognition ID in a near field communication tag included in an electronic shelf label;
(b) reading the product recognition ID by a mobile communication terminal;
(c) transmitting the read product recognition ID to a main server;
(d) recognizing product information corresponding to the product recognition ID transmitted to the main server;
(e) transmitting the recognized product information to the electronic shelf label or the mobile communication terminal; and
(f) displaying the product information transmitted to the electronic shelf label or the mobile communication terminal.

13. The operating method of an electronic shelf label system according to claim 12, wherein the product recognition ID includes an MAC address and a security key and a client code.

14. The operating method of an electronic shelf label system according to claim 13, wherein in the step (e), the product information mapped to the MAC address is transmitted to the mobile communication terminal or the electronic shelf label.

15. The operating method of an electronic shelf label system according to claim 13, wherein in the step (e), the product information is encoded using the security key.
